# EUROPEAN PATENT APPLICATION

(11) **EP 2 315 451 A2**
(43) Date of publication of application: **27.04.2011**
(21) Application number: 10167193.1
(22) Date of filing: 24.06.2010
(51) Int. Cl.: H04N 13/00

(54) **Display apparatus, image displaying method, 3D spectacles and driving method thereof**

(30) Priority: 22.10.2009 KR 20090100899
(71) Applicant: SAMSUNG ELECTRONICS CO., LTD., Suwon-si, Gyeonggi-do (KR)
(72) Inventor: Nam, Dae-hyun, Gyeonggi-do (KR); Kim, Ja-yeon, Gyeonggi-do (KR)
(74) Representative: Walaski, Jan Filip

(57) **Abstract**

A display apparatus for displaying a three-dimensional (3D) image based on whether a user is wearing a viewing device for viewing the 3D image and an image display method thereof, and 3D spectacles for viewing the 3D image and a driving method thereof are disclosed. In the display apparatus, information indicating whether the user is wearing the viewing device is received. An input image signal is processed based on whether the information indicates that the user is wearing the viewing device. With this configuration, the input image signal may be displayed as a 2D image or a 3D image depending upon whether the user is wearing the 3D viewing device.

## Description

The present invention relates to a display apparatus, an image displaying method, three-dimensional (3D) spectacles and a driving method thereof. More particularly, the present disclosure relates to a display apparatus, an image displaying method, 3D spectacles and a driving method thereof, displaying either a two-dimensional (2D) image or a 3D image, depending upon whether a user is wearing the 3D spectacles.

Objects seen through a human's eyes are viewed in three dimensions (3D). The three dimensions are length, width, and height (or depth). When viewing an object in one dimension (1D) or two dimensions (2D), no great difference is discerned when the object is seen through one eye or through two eyes. However, in case of three dimensions (3D), a great difference is discerned between viewing the object through one eye and viewing the object through two eyes.

For this reason, technologies that display images in three dimensions have been developed, and methods of displaying 3D images have been studied and put to practical use in a number of fields including photography, cinematography, television, gaming, etc. In particular, 3D image displaying technology permits a viewer to feel the cubic sense of an object using a binocular parallax, which is the largest factor that allows the viewer to recognize the cubic sense of the object over a short distance. Regarding methods of viewing 3D images, there are a spectacles/glasses type and a non-spectacles type. The spectacles type method makes it possible to view the 3D images through 3D spectacles employing a shutter mechanism, or though polarized spectacles.

3D images may be converted into 2D images, and vice versa. Where 3D images are displayed, but a user wishes to view 2D images, the 3D images can first be converted into 2D images and then displayed, and vice versa. Conversion of 2D images and 3D images may be accomplished by activating an image mode conversion menu. That is, if a user activates the image mode conversion menu of a display apparatus and selects 2D images or 3D images, 2D images or 3D images are displayed according to the user's selection. However, this image mode conversion mechanism is inconvenient to use because manipulation by the user is required whenever the image mode needs to be changed.

Accordingly, the present disclosure purposes to provide a display apparatus, an image displaying method, 3D spectacles and a driving method thereof, displaying a 3D image or a 2D image, depending upon whether a user is wearing the 3D spectacles.

According to an aspect of the present invention, there is provided a display apparatus including: a signal receiving unit that receives an image signal; an image processing unit that processes the received image signal; a controller that receives information, which indicates whether a user is wearing three-dimensional (3D) spectacles for viewing a 3D image, and controls the image processing unit to process the received image signal to generate a 3D signal to be displayed as the 3D image when the information is received.

The controller may control the display apparatus to display the received image signal as the 3D image when the information indicates that the user is wearing the 3D spectacles, and display the received image signal as a two-dimensional (2D) signal when the information indicates that the user is not wearing the 3D spectacles.

Where there are a plurality of users who are respectively wearing the 3D spectacles, the controller may display the image in 3D once at least one user is wearing one of the 3D spectacles.

Where second information of the user's state, other than the information which indicates that the user is wearing the 3D spectacles, is received the controller may display the 3D image based on the second information.

According to another aspect of the present invention, there is provided a three-dimensional (3D) spectacles for viewing a 3D image displayed on a display apparatus, including: a lens unit through which a user wearing the 3D spectacles views the 3D image; a sensor that detects whether a user is wearing the 3D spectacles; and a signal sending unit that sends a signal to the display apparatus, the signal indicating whether the sensor detects that the user is wearing the 3D spectacles.

The sensor may be an electrostatic sensor.

The sensor may include at least one of an earth magnetic field sensor, an accelerator sensor, or a pulse sensor.

Also, the 3D spectacles may employ at least one of a shutter and a polarizer.

According to another aspect of the present invention, there is provided an image displaying method for displaying a three-dimensional (3D) image on a display apparatus, including: receiving an image signal; receiving information indicating whether a user is wearing 3D spectacles for viewing the 3D image; processing the received image signal to generate the 3D image when the information indicating that the user is wearing the 3D spectacles is received; and displaying the generated image.

The processing may include processing the received image signal to generate the 3D image when the information indicates that the user is wearing the 3D spectacles.

The processing may include processing the received image signal to generate a 2D image when the information indicates that the user is not wearing the 3D spectacles.

Second information that indicates whether a second user is wearing second 3D spectacles may be received, and the processing may include processing the received image signal to generate the 3D image when at least one of the first information indicates that he user is wearing the 3D spectacles or the second information indicates that the second user is wearing the second 3D spectacles.

The receiving may include receiving second information about the user's state, other than the information which indicates that the user is wearing the 3D spectacles, and the processing may include generating the 3D image based on the second information.

The receiving may include receiving second information from second 3D spectacles, which indicates that a second user is not wearing the second 3D spectacles, and the processing may include processing the received signal to generate a two-dimensional (2D) image when the second information is received.

Second information that indicates whether a second user is wearing second 3D spectacles may be received, and the processing may include processing the received image signal to generate the 3D image when at least one of the first information indicates that the user is wearing the 3D spectacles or the second information indicates that the second user is wearing the second 3D spectacles.

According to another aspect of the present invention, there is provided a method of controlling three-dimensional (3D) spectacles for viewing a 3D image displayed on a display apparatus, including: sensing, by the 3D spectacles, whether a user is wearing the 3D spectacles; and transmitting information indicating whether the user is wearing the 3D spectacles to the display apparatus.

The sensing may include sensing at least one of user motion, user moving speed, and user vital rhythm, and the transmitting may include transmitting second information indicating the at least one of the user motion, the user moving speed, and the user vital rhythm to the display apparatus.

The above embodiments and/or utilities of the present disclosure will become apparent and more readily appreciated from the following description of the exemplary embodiments, taken in conjunction with the accompanying drawings of which:
FIG. 1 illustrates a configuration of a display apparatus according to an exemplary embodiment;
FIG. 2 illustrates a configuration of 3D spectacles according to an exemplary embodiment;
FIG. 3 is a flow chart showing operations of the display apparatus according to an exemplary embodiment; and
FIG. 4 is a flow chart showing operations of the 3D spectacles according to an exemplary embodiment.

Exemplary embodiments will now be described in detail with reference to the accompanying drawings so as to be easily realized by a person having ordinary knowledge in the art. The exemplary embodiments may be embodied in various forms without being limited to forms set forth herein. Descriptions with respect to those portions easily realized by the person having ordinary skill in the art are omitted for clarity, and like reference numerals refer to like or similar elements throughout. Expressions such as "at least one of," when preceding a list of elements, modify the entire list of elements and do not modify the individual elements of the list.

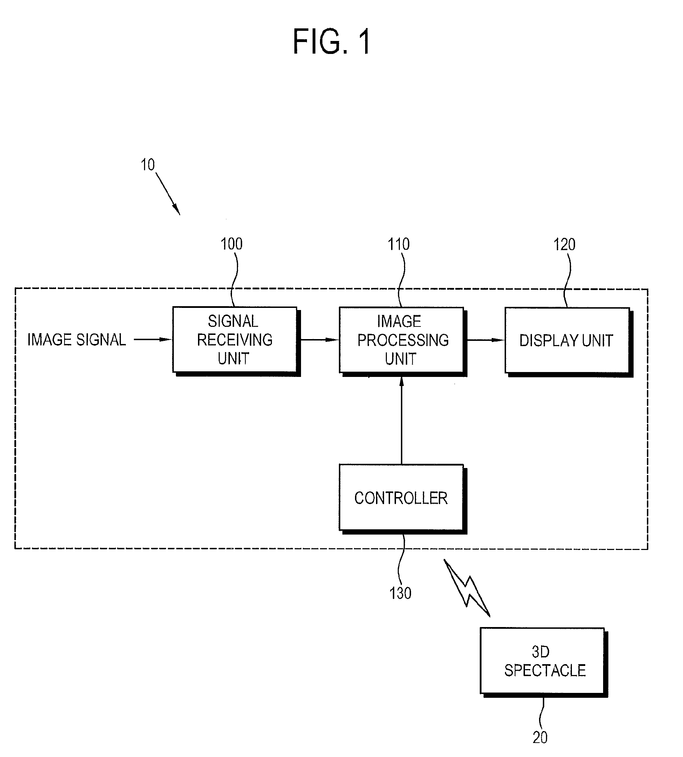

FIG. 1 illustrates a configuration of a display apparatus 10 according to an exemplary embodiment. As illustrated in FIG. 1, the display apparatus 10 according to this exemplary embodiment includes a signal receiving unit 100, an image processing unit 110, a display unit 120 and a controller 130, such as a central processing unit (CPU), that controls operations of the display apparatus. The signal receiving unit 100 receives an image signal. For realizing a 3D image, a left eye image and a right eye image may be included in the image signal. The image processing unit 110 processes the image signal received by the signal receiving unit 100. The image processing unit 110 may process the image signal so as to be displayed in a 2D image or a 3D image in a converted manner. That is, if the image signal is for 2D image, the image processing unit 110 may convert the image signal for a 3D image display. If the image signal is for 3D image, the image processing unit 110 may convert the image signal for a 2D image display. Displaying of a 2D image using an image signal for the 3D image may be performed by displaying only one of the left eye image and the right eye image for realizing the 3D image. The display unit 120 displays the image based on the image signal processed by the image processing unit 110.

If 3D spectacles 20 transmit information about whether a user is wearing the spectacles 20 (hereinafter referred to as "3D spectacles 20 wearing information"), the controller 130 receives the 3D spectacles 20 wearing information and controls the image processing unit so as to display the 3D image or the 2D image, depending upon whether the user is wearing the 3D spectacles 20 or not. That is, if the user is wearing the 3D spectacles 20, the controller 130 determines that the user wishes to see the 3D image, and thereby controls the 3D image to be displayed. If the user is not wearing the 3D spectacles 20, the controller 130 determines that the user does not wish to see the 3D image, and thereby controls the 2D image to be displayed. Where there are a plurality of users who are wearing the 3D spectacles 20, the 3D image is displayed if at least one user is wearing the 3D spectacles 20, but the 2D image is displayed if no users are wearing the 3D spectacles 20. Where the received image signal is for the 2D image, the controller 130 controls the image processing unit 110 so that the 2D image is converted into a 3D image to be displayed. Where the received image signal is for the 3D image, the controller 130 controls the image processing unit 110 so that the 3D image is converted into a 2D image to be displayed. The 3D spectacles 20 wearing information may be received by the controller 130, but the 3D spectacles 20 wearing information may also be received by a separate receiving unit (not shown). Also, if the 3D spectacles 20 sends information about a state of the user (hereinafter referred to as "user's state information"), other than the 3D spectacles 20 wearing information, the controller 130 may apply the user's state information to the 3D image to be displayed. That is, if information about user's motion, moving speed or vital rhythm, etc. is transmitted, this information may be applied to the 3D image to be displayed. By doing so, the 3D image having higher virtual reality and stereoscopic sense may be presented to the user. If the user takes off the 3D spectacles 20 after wearing the 3D spectacles 20, the 3D spectacles 20 may send any signal. Then, the display apparatus 10 may display 2D image.

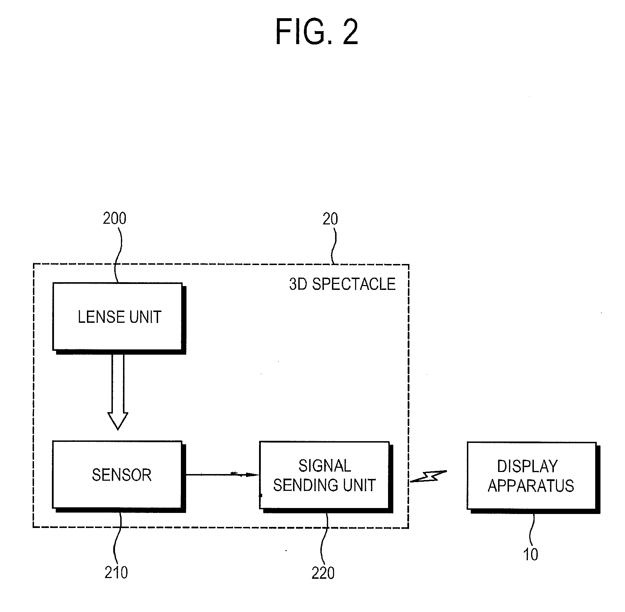

FIG. 2 illustrates a configuration of 3D spectacles 20 according to an exemplary embodiment. As illustrated in FIG. 2, the 3D spectacles 20 include a lens unit 200, a sensor 210, and a signal sending unit 220. The lens unit 200 is designed to view an image displayed by the display apparatus 10. The sensor 210 detects whether the user is wearing the 3D spectacles 20. The sensor 210 may be an electronic sensor, which detects whether the user is wearing the 3D spectacles 20. The sensor 210 may include an earth magnetic field sensor, an accelerator sensor, a pulse sensor and so on. The signal sending unit 220 sends the 3D spectacles 20 wearing information sensed by the sensor 210 to the display apparatus 10. The signal sending unit 220 may include a communication device (not shown) to communicate with the display apparatus 10. Where the user's state information other than the 3D spectacles 20 wearing information is sensed by the sensor 210, this state information is sent to the display apparatus 10. The signal sending unit 220 preferably sends the sensed information to the display apparatus 10 through an infrared communication mechanism available for low-power communication. If the user is not wearing the 3D spectacles, the signal sending unit 220 may not send any signal to the display apparatus 10. Thus, the display apparatus 10 may display the 3D image when a signal is received from the 3D spectacles 20. Furthermore, when the user takes off the 3D spectacles 20 after wearing the 3D spectacles 20, the signal sending unit 220 may send any signal to the display apparatus 10. Then, the display apparatus 10 may display 2D image.

Meanwhile, the 3D spectacles 20 according to this exemplary embodiment may be driven by any one of a shutter or a polarizer. The shutter-type 3D spectacles 20 are operated synchronously with the 3D image displayed by the display apparatus 10. When the left eye image is displayed, a left eye shutter of the shutter-type 3D spectacles 20 is opened, but a right eye shutter thereof is closed. When the right eye image is displayed, the right eye shutter of the 3D spectacles is opened and the left eye shutter is closed. The polarizer-type 3D spectacles 20 are equipped with two different polarized plates. As the left side image and the right side image of the 3D image have respectively different polarized lights, wearing spectacles with different polarized plates makes it possible to see a 3D image because the left side image and the right side image are seen separately. The 3D spectacles 20 may also include a controller (not shown), such as a central processing unit (CPU), that controls operations of the 3D spectacles 20.

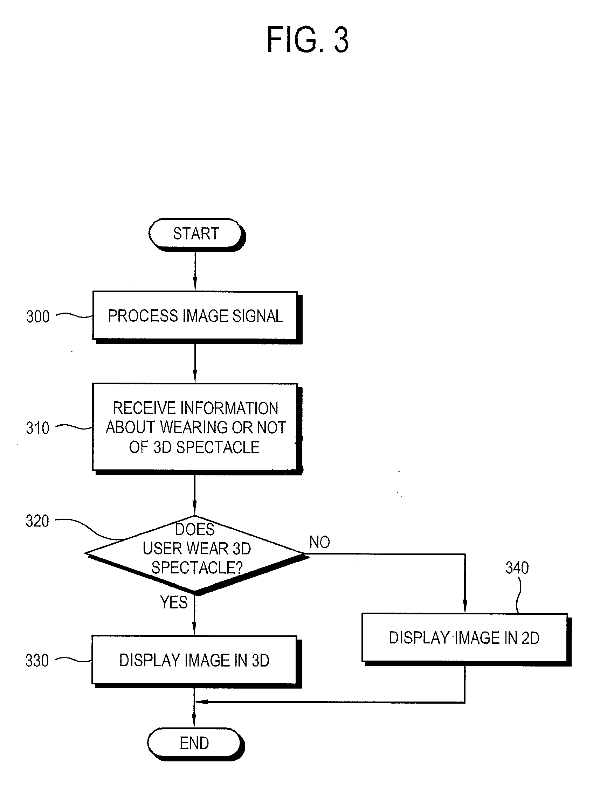

FIG. 3 is a flow chart showing operations of the display apparatus according to an exemplary embodiment. When an image signal is received by the signal receiving unit 100, the image processing unit 110 processes the received signal (300). When information about whether the user is wearing the 3D spectacles 20, sent from the 3D spectacles 20, is received (310), the controller 130 determines whether the user is wearing the 3D spectacles 20 (320). If the user is wearing the 3D spectacles 20 (320 YES), the controller 130 controls the 3D image to be displayed (330). If the user is not wearing the 3D spectacles 20 (320 NO), the controller 130 controls the 2D image to be displayed (340).

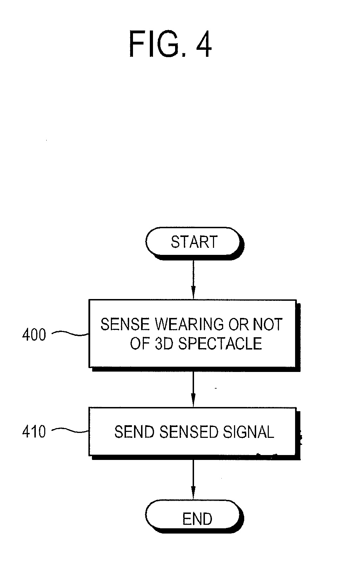

FIG. 4 is a flow chart showing operations of the 3D spectacles according to an exemplary embodiment. If the user is wearing the 3D spectacles 20, the sensor 210 senses that the user is wearing the 3D spectacles 20 (400), and the signal sending unit 220 sends the sensed information to the display apparatus 10 (410). If the sensed signal is sent from the 3D spectacles 20, the display apparatus 10 displays the 3D image.

As described above, the present exemplary embodiments enable 3D images to be displayed when the user is wearing the 3D spectacles 20, or 2D images to be displayed when the user is not wearing the 3D spectacles 20.

Although a few exemplary embodiments have been illustrated and described in detail, the present disclosure shall not be limited thereto, and can be carried out in various ways while still falling within the scope of the claims.

## Claims

1. A display apparatus comprising:
a signal receiving unit that receives an image signal;
an image processing unit that processes the received image signal; and
a controller that receives information, which indicates whether a user is wearing three-dimensional (3D) spectacles for viewing a 3D image and controls the image processing unit to display an image corresponding to the image signal in either a two-dimensional (2D) image or the 3D image depending upon whether the user is wearing the 3D spectacles.

2. The display apparatus of claim 1, wherein
the controller displays the image as the 3D image when the information indicates that the user is wearing the 3D spectacles.

3. The display apparatus of claim 1, wherein the controller displays the image as the 2D image when the information indicates that the user is not wearing the 3D spectacles, or when there is no information to indicate whether the user is wearing the 3D spectacles.

4. The display apparatus of claim 1, wherein there are a plurality of users who are wearing the 3D spectacles, and the controller displays the image as the 3D image when at least one user is wearing the 3D spectacles.

5. The display apparatus of claim 1, wherein the controller receives second information of the user's state, other than the information which indicates that the user is wearing the 3D spectacles, and displays the 3D image based on the second information.

6. The display apparatus of claim 1, wherein at least two pairs of 3D spectacles communicate with the display apparatus and the user is not wearing the 3D spectacles both, the controller displays the 3D image to be displayed as the 2D image.

7. The display apparatus of claim 6, wherein the received image signal is a 3D image signal, and wherein the controller displays the 3D image signal as the 2D image by processing the received image signal based on only one of a left eye image or a right eye image of the received image signal.

8. Three-dimensional (3D) spectacles for viewing a 3D image displayed on a display apparatus, comprising:
a lens unit through which a user wearing the 3D spectacles views the 3D image;
a sensor that detects whether a user is wearing the 3D spectacles; and
a signal sending unit that sends a signal to the display apparatus, the signal indicating whether the sensor detects that the user is wearing the 3D spectacles.

9. The 3D spectacles of claim 8, wherein the sensor comprises an electrostatic sensor.

10. The 3D spectacles of claim 8, wherein the sensor comprises at least one of an earth magnetic field sensor, an accelerator sensor, or a pulse sensor.

11. The 3D spectacles of claim 8, further comprising at least one of a shutter or a polarizer.

12. An image displaying method for displaying a three-dimensional (3D) image on a displaying apparatus, comprising:
receiving and processing an image signal;
receiving information about whether a user is wearing 3D spectacles for viewing the 3D image, transmitted from at least one pair of 3D spectacles; and
displaying either a 3D image or a two-dimensional(2D) image, depending upon whether the user is wearing the 3D spectacles.

13. The image displaying method of claim 12, wherein the displaying comprises displaying the 3D image when the information indicates that the user is wearing the 3D spectacles.

14. The image displaying method of claim 12, wherein the displaying comprises displaying the 2D image when the information indicates that the user is not wearing the 3D spectacles, or when there is no information to indicate whether the user is wearing the 3D spectacles.

15. A method of controlling three-dimensional (3D) spectacles for viewing a 3D image displayed on a display apparatus, comprising:
sensing, by the 3D spectacles, whether a user is wearing the 3D spectacles; and
transmitting information indicating whether the user is wearing the 3D spectacles to the display apparatus.
